# EUROPÄISCHE PATENTSCHRIFT

(11) **EP 2 046 620 B1**
(45) Veröffentlichungstag und Bekanntmachung des Hinweises auf die Patenterteilung: **03.07.2013**
(21) Anmeldenummer: 07801184.8
(22) Anmeldetag: 28.07.2007
(51) Int. Cl.: B61D 43/00, F16C 19/52, B61K 9/04, G08C 17/02

(54) **VORRICHTUNG ZUR ÜBERWACHUNG MINDESTENS EINER BETRIEBSGRÖSSE EINES RADSATZLAGERS**
DEVICE FOR MONITORING AT LEAST ONE OPERATING VARIABLE OF A WHEEL SET BEARING
DISPOSITIF DE CONTROLE D'AU MOINS UNE VALEUR DE FONCTIONNEMENT D'UN PALIER D'ESSIEU

(30) Priorität: 01.08.2006 DE 102006035703
(43) Veröffentlichungstag der Anmeldung: 15.04.2009
(73) Patentinhaber: Schaeffler Technologies AG & Co. KG, 91074 Herzogenaurach (DE)
(72) Erfinder: SCHERF, Eugen, 97464 Niederwerm (DE); SCHLEIFENBAUM, Joachim, 97464 Niederwerrn (DE)
(86) Internationale Anmeldenummer: PCT/DE2007/001343
(87) Internationale Veröffentlichungsnummer: WO 2008/014766

(56) Entgegenhaltungen:
- WO-A-01/89903
- DE-A1- 19 644 744
- US-B1- 6 535 135

## Beschreibung

### Gebiet der Erfindung

Die Erfindung liegt auf dem Gebiet der Wälzlagertechnik für Radsatzlager - insbesondere für Schienenfahrzeuge - und betrifft eine Vorrichtung zur Überwachung mindestens einer Betriebsgröße eines Radsatzlagers, das mindestens einen rotierenden Lagerring und ein ortsfestes Radsatzlagergehäuse umfasst, mit den Merkmalen des Oberbegriffs des Patentanspruchs 1.

Radsatzlager stehen unter erheblicher mechanischer Belastung. Dennoch werden von ihnen äußerst lange störungsfreie Standzeiten erwartet. Besonders kritisch sind dabei so genannte Heißläufer, bei denen beispielsweise durch Verschleiß oder Überhitzung fortschreitende Lagerschäden auftreten, die ungünstigstenfalls zum Festsetzen des Lagers und damit zu erheblichen Störungen des Betriebs führen können. Deshalb besteht zunehmender Bedarf, betriebsgemäß auftretende Belastungen, beispielsweise thermische Belastungen, zur Sicherstellung eines störungsfreien Betriebs beobachten und überwachen zu können.

Um Heißläufer bei Schienenfahrzeugen zu erfassen, sind im Wesentlichen zwei Technologien bekannt. Nach der einen Technologie wird nur die Temperatur des Lagergehäuses erfasst und in an sich - z.B. aus dem Aufsatz "PHOENIX MB / The New Dimension in Hot Box Detection", E. Eisenbrand in SIGNAL + DRAHT 5/2001 - bekannter Weise von streckenseitigen feststehenden Empfangsstationen abgetastet Nach der anderen Technologie, auf welche sich auch diese Anmeldung bezieht, sind bei Schienenfahrzeugen Vorrichtungen zur Überwachung von Betriebsgrößen von Radsatzlagern bekannt, die zumindest einen rotierenden Lagerring, ein ortsfestes Radsatzlagergehäuse und Sensoren umfassen. Eine solche Vorrichtung, welche auch gleichzeitig den engsten Stand der Technik bildet, ist aus WO 01/89903 bekannt und umfasst einen Sensor, der unmittelbar am rotierenden Lagerring angeordnet ist, eine Sendeeinheit, die mit dem Lagerring mitrotierend angeordnet ist und die von Sensor bereitgestellte Messwerte drahtlos zur einer ortsfesten Empfangsstation übermittelt, und mit einer Energieversorgungseinheit mit einem ersten mitrotierenden und einem kooperierenden am Radlagergehäuse angeordneten Generatorelement den Sensor und die Sendeeinheit mit Energie versorgt. und die die entsprechenden Betriebsgrö-βen direkt am Lager detektieren und drahtlos an eine Empfangsstation übermitteln.

Ausgehend von diesem Stand der Technik ist aber völlig offen, wie die Vorrichtung zur Überwachung von Betriebsgrößen von Radsatzlagern auszubilden ist, damit diese den rauen Praxisbedingungen standhält.

Daher liegt der Erfindung die Aufgabe zugrunde, ein Vorrichtung zur Überwachung von Betriebsgrößen von Radsatzlagern anzugeben, die leicht handhabbar, montierbar und vorprüfbar ist.

Diese Aufgabe wird erfindungsgemäß gelöst durch eine Vorrichtung mit den Merkmalen des Patentanspruchs 1.

Demgemäß weist die erfindungsgemäße Vorrichtung eine erste Adapterplatte auf, die eine Sendeeinheit, und ein erstes Generatorelement trägt,und eine zweite Adapterplatte auf, die Empfangseinrichtung und das zweite Generatorelement trägt.
Ein wesentlicher Aspekt der Erfindung ist dabei die Applikation eines - durch die erfindungsgemäß vorgesehene Energieversorgungseinheit - energieautarken Sensors in unmittelbarer Nähe der zu überwachenden besonders kritischen Radsatzlagerkomponente - nämlich dem mitdrehenden Lagerring. Dadurch kann der Sensor sehr genaue Informationen über die Betriebsbedingungen und Betriebsgrößen des Lagerrings liefern. Vorteilhafterweise können diese Informationen ohne die eingangs genannten Nachteile anderer denkbarer Messansätze gewonnen und übermittelt werden. So ist insbesondere keine Batterie oder Verkabelung zwischen einer ortsfesten Energiequelle und dem Sensor bzw. der Sendeeinheit zur Energieversorgung erforderlich, weil beide Komponenten von der Energieversorgungseinheit energieautark versorgt sind.

Damit ist also der besondere Vorteil einer wartungsfreien fahrzeugseitigen Betriebsgrößenerfassung unmittelbar an der Wirkstelle erreicht, wobei die dazu erforderlichen, relativ wenigen und wenig Bauraum erfordernden Systemkomponenten in einfacher Weise in das Radsatzlager integriert werden können.

Nach einer vorteilhaften Ausgestaltung der Erfindung ist der Sensor ein Temperatursensor, der besonders bevorzugt ein temperaturabhängiger elektrischer Widerstand ist.

Ein besonderer Aspekt der Erfindung ist die technisch einfache und dennoch zuverlässige Bereitstellung der für die Überwachung erforderlichen Energie der auf dem mitdrehenden Lagerteil bzw. Achskappe angeordneten Komponenten (zumindest Sensor und Sendeeinheit). Vor diesem Hintergrund sieht eine bevorzugte Weiterbildung der Erfindung vor, dass das erste mitdrehende Generatorelement der Energieversorgungseinheit ein Wiegandelement ist und dass das zweite kooperierende Generatorelement von ortsfest angeordneten Magneten gebildet wird.

Nach einer vorteilhaften Fortbildung der Erfindung ist eine erste Adapterplatte vorgesehen, die die Sendeeinheit und das erste Generatorelement trägt und die auf eine mitrotierende Achskappe montierbar ist. Damit sind die mitrotierenden Komponenten vorteilhafterweise auf einem gemeinsamen Träger vormontiert zusammengefasst, dadurch leichter handhabbar, montierbar und vorprüfbar.

Die erste Adapterplatte kann fertigungstechnisch und hinsichtlich ihres Gewichts bzw. etwaiger Unwuchten bevorzugt ein Kunststoff- oder Kunststoffvergussteil sein. Zudem kann die erste Adapterplatte bevorzugt an die Kontur der Achskappe angepasst sein. Die mitrotierenden Komponenten können dann besonders vorteilhaft in die Adapterplatte eingebettet oder eingegossen sein, wodurch ein besonders robuster Aufbau realisiert ist.

Nach einer vorteilhaften Ausgestaltung der Erfindung ist eine zweite Adapterplatte vorgesehen, die das zweite Generatorelement und die Empfangseinrichtung trägt. Damit sind auch diese Komponenten in vorteilhafter Weise auf einem gemeinsamen Träger vormontiert und dadurch leichter handhabbar, montierbar und vorprüfbar. Weiter bevorzugt sind die Adapterplatten kreisförmig.

Nach einer vorteilhaften Weiterbildung der Erfindung ist die Empfangseinrichtung eine passive Antenne, an die eine außerhalb des Radlagergehäuses angeordnete Antenne angeschlossen ist.

Damit kann in aufbautechnisch besonders einfacher Weise das von der Sendeeinheit gelieferte Signal zur Weiterleitung an einen externen, z.B. streckenseitigen Empfänger außerhalb des Radsatzlagergehäuses geleitet werden, ohne dass aktive Komponenten und damit eine weitere Energieversorgung erforderlich wären.

Dazu kann bevorzugt das Radlagergehäuse von einem Deckel abgeschlossen sein, der zumindest einen für die von der Sendeeinheit abgestrahlten Funksignale durchlässigen Bereich aufweist. Der durchlässige Bereich des Deckels kann fertigungstechnisch bevorzugt aus einem Kunststoffmaterial bestehen. Eine besonders robuste und zuverlässige Ausgestaltung der Erfindung sieht vor, dass das zweite Generatorelement in den Deckel eingebettet, insbesondere eingegossen, ist.

Um das Energiemanagement weiter zu optimieren, sieht eine vorteilhafte Ausgestaltung der Erfindung vor, dass die Signalübermittlung zum ortsfesten Empfänger erst erfolgt, wenn die Messwerte einen vorgegebenen oder vorgebbaren Schwellwert überschreiten. Damit kann die Überwachung so ausgelegt werden, dass nur bei Eintreten anomaler Betriebszustände bzw. Auftreten unzulässiger Betriebsgrößen eine Übermittlung an den ortsfesten Empfänger erfolgt, womit dann ggf. durch eine angeschlossene Steuerschaltung geeignete Gegenmaßnahmen eingeleitet werden.

Nach einer weiteren vorteilhaften Weiterbildung der Erfindung ist eine Signal-Aufbereitungseinheit vorgesehen, die die übermittelten Messwerte hinsichtlich des Messwerttrends auswertet und daraus eine Gefährdungsprognose ableitet. Häufig lassen sich bereits aus z.B. stetig ansteigenden, gleichwohl absolut gesehen noch unterhalb eines Zulässigkeitsgrenzwertes liegende Messwerte (z.B. Temperaturwerten des Innenrings) Rückschlüsse auf etwaige eingetretene Schädigungen ziehen bzw. geeignete Warn- oder Gegenmaßnahmen (z.B. Verlangsamung der Fahrt) ableiten.

Die Signal-Aufbereitungseinheit kann dazu besonders bevorzugt einen Vergleich zwischen mehreren Radsatzlagern z.B. eines Wagens durchführen und Abweichungen anzeigen, wenn diese eine vorgegebene Toleranzschwelle überschreiten.

Weitere Vorteile und Aspekte der Erfindung ergeben sich auch oder ergänzend aus der nachfolgenden Beschreibung der Erfindung unter Bezugnahme auf die Zeichnung.

Dabei zeigen:
- Figur 1: im Längsschnitt ein Radsatzlager mit einer erfindungsgemä-βen Vorrichtung,
- Figur 2: schematisch einen Temperatursensor mit zugeordneter Sendeeinheit und deren Energieversorgung,
- Figur 3: eine erste Anordnungsvariante kooperierender Generatorelemente,
- Figur 4: eine zweite Anordnungsvariante kooperierender Generatorelemente und
- Figur 5: eine dritte Anordnungsvariante kooperierender Generatorelemente.

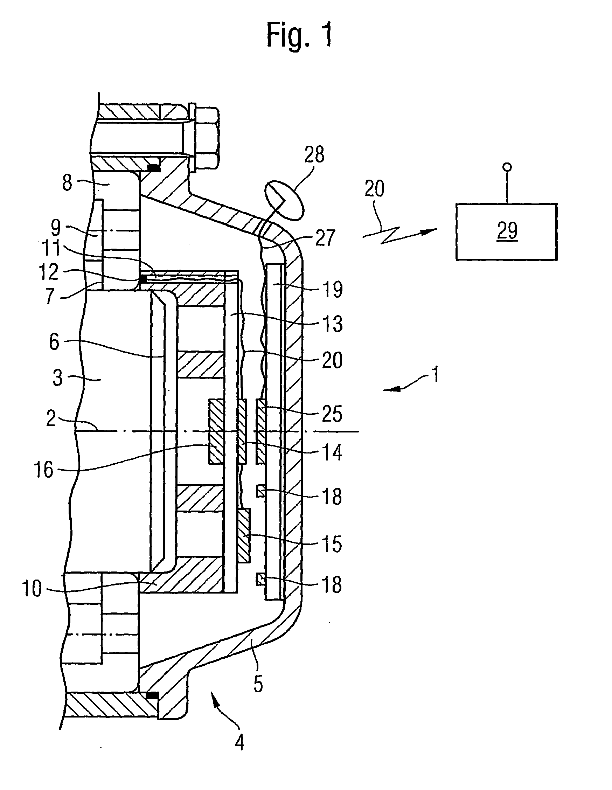

Figur 1 zeigt im Längsschnitt ein Radsatzlager 1 eines Schienenfahrzeugs, das eine nur teilweise dargestellte, um eine Drehachse 2 rotierende Radachse oder Radnabe 3 und ein Radsatzlagergehäuse 4 aufweist. Das Gehäuse 4 umfasst einen Gehäusedeckel 5, der im Wesentlichen das radferne Ende 6 der Radachse 3 abdeckt und über Schrauben lösbar mit dem übrigen Gehäuse 4 verbunden ist.

Das Radsatzlager 1 umfasst einen inneren, mit der Radachse 3 fest verbundenen und somit mitrotierenden Lagerring 7, einen äußeren, fest mit dem Gehäuse 4 verbundenen Lagerring 8 und dazwischen laufende Wälzkörper 9 (diese Komponenten sind jeweils nur teilweise zeichnerisch dargestellt).

Das Gehäuse 4 ist fest an dem Schienenfahrzeug montiert und wird daher nachfolgend zur Differenzierung gegenüber den sich mitdrehenden Komponenten (z.B. dem Lagerring 7) als ortsfest bezeichnet, auch wenn sich das Schienenfahrzeug seinerseits selbstverständlich entlang der Schienenstrecke bewegt.

An dem Ende 6 ist eine Achskappe 10 befestigt, die also mit der Radachse 3 und dem Lagerring 7 mitrotiert. In der Achskappe 10 erstreckt sich eine im Wesentlichen achsparallele Bohrung 11, in die ein Sensor 12 eingebracht ist, dessen sensibler Messfühler sich direkt an der Seitenfläche des Lagerrings 7 befindet.

Der Sensor 12 ist in diesem Ausführungsbeispiel als Temperatursensor in Form eines Heißleiters ausgebildet und misst dementsprechend Temperaturwerte des Lagerrings 7. Selbstverständlich könnten alternativ oder zusätzlich auch andere Sensoren für andere betriebsrelevante Messgrößen, wie beispielsweise wirkende Lagerkräfte, vorgesehen sein.

Auf der Achskappe 10 ist eine erste Adapterplatte 13 fixiert, die eine Sendeeinheit 14 und ein erstes Generatorelement 15 trägt. Die Adapterplatte 13 hat die Grundform einer Kreisscheibe. Sie kann aus einem Kunststoff- oder Kunststoffgussteil bestehen und könnte - in Abweichung von dem figürlich dargestellten Ausführungsbeispiel - in ihrem Profil und ihrer Kontur an die Kontur der Achskappe 10 angepasst sein. Ferner könnten die Sendeeinheit 14 und das erste Generatorelement 15 in die erste Adapterplatte 13 integriert, eingebettet oder eingegossen sein, was zu einem besonders robusten Aufbau beiträgt.

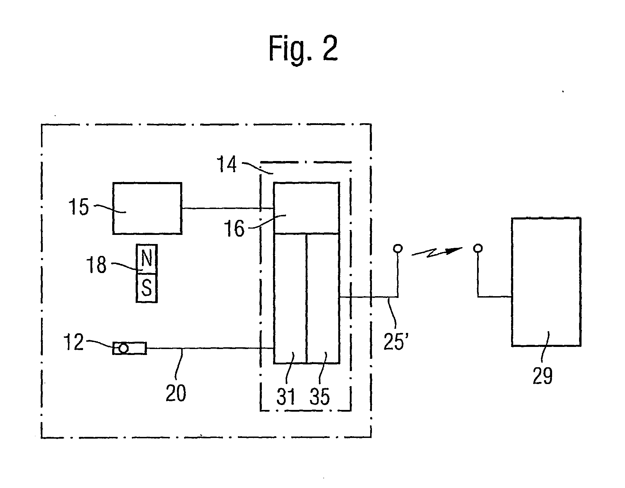

Die Sendeeinheit 14 umfasst u. a. - wie nachfolgend im Zusammenhang mit Figur 2 noch näher erläutert - einen Energiespeicher 16, der mit Spannungsimpulsen bzw. Stromimpulsen des ersten Generatorelements 15 beaufschlagt ist.

Diese Spannungs- bzw. Stromimpulse werden im Zusammenspiel des ersten Generatorelements 15 - das als so genanntes, an sich bekanntes Wiegandelement ausgebildet ist - mit einem zweiten Generatorelement 18 in Form mehrer mit abwechselnder Polarität angeordneter Permanentmagneten erzeugt, wenn das erste Generatorelement 15 mit dem Lagerring 7 bzw. der ersten Adapterplatte 13 relativ zu dem zweiten Generatorelement 18 rotiert.

Das zweite Generatorelement (die Permanentmagnete) 18 ist seinerseits auf einer zweiten Adapterplatte 19 angeordnet, die ebenfalls eine kreisförmige Grundform hat. Die Permanentmagnete 18 sind paarweise mit alternierender Polarität so angeordnet, dass sie ein permanentes Magnetfeld oberhalb der Adapterplatte 19 erzeugen, das radial zur Adapterplatte 19 verläuft. Das Wiegandelement 15 ist seinerseits auf der ersten Adapterplatte 13 so angeordnet, dass seine Längsachse parallel zu dem Magnetfeld verläuft.

Der Temperatursensor 12 ist ausgangsseitig über ein Kabel mit der Sendeeinheit 14 verbunden, die die von dem Sensor 12 als Sensorausgangssignale gelieferten Messgrößen 20 - in nachfolgend noch detailliert im Zusammenhang mit der Figur 2 beschriebener Weise - in Form von Funktelegrammen an eine Empfangseinheit in Form einer ortsfesten passiven Antenne 25 überträgt. Von dort werden die empfangenen Telegramme über ein Hochfrequenzkabel 27 einer externen Antenne 28 zugeführt, die als Helix-Antenne ausgebildet sein kann. Diese strahlt ihrerseits die empfangenen Messgrößen 20 weiter ab zu einer nicht näher dargestellten streckenseitigen, ortsfesten oder zugseitigen Signal-Aufbereitungseinheit 29. Die Antenne 25 und das zweiten Generatorelement 18 können auch in die zweite Adapterplatte 19 integriert oder eingebettet sein.

Alternativ zu dem dargestellten Ausführungsbeispiel könnte der Gehäusedeckel 5 auch einen für die Signale der Sendeeinheit 14 durchlässigen Bereich aufweisen. Dies könnte z.B. eine durch Kunststoff verschlossene Öffnung in dem Deckel sein; bei dieser Ausgestaltung können die Antennen 25 und 28 entfallen - die Empfangseinheit würde dann unmittelbar von der Signal-Aufbereitungseinheit 29 gebildet sein. Außerdem könnte dann das zweite Generatorelement 18 in den Kunststoff des Deckels eingebettet sein.

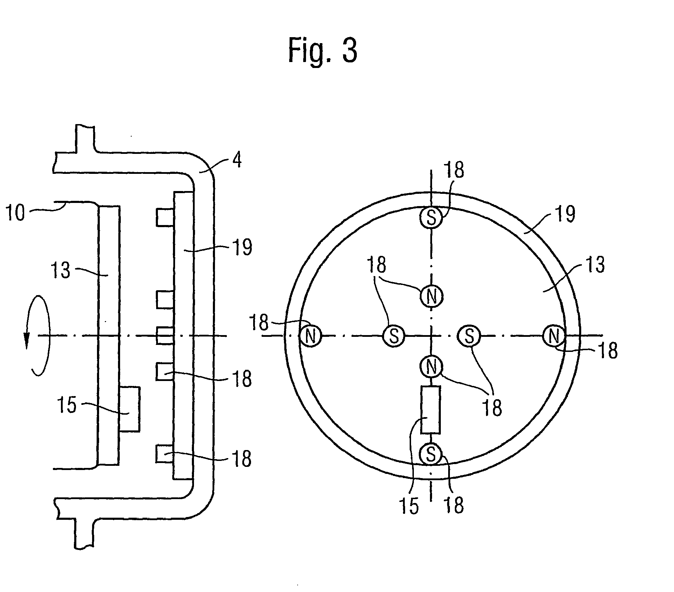

Figur 2 zeigt die relative Anordnung der Generatorelemente 15 und 18 sowie Einzelheiten der Sendeeinheit 14. Man erkennt stellvertretend einen der abwechselnd paarweise angeordneten Permanentmagnete 18 (vgl. dazu auch Figuren 3 bis 5). Bei Drehung der Radnabe 3 bzw. des Lagerrings 7 bewegt sich das Wiegandelement 15 an den Magneten vorbei, wodurch in an sich bekannter Weise Spannungs- bzw. Stromimpulse in dem Wiegandelement erzeugt werden, deren elektrische Energie einem Energiespeicher 16 der Sendeeinheit 14 zugeführt wird.

Mit dem Energiespeicher 16 ist eine Prozesssteuerung, z.B. in Form eines Mikrokontrollers 31, verbunden. Dieser setzt das von dem Sensor 12 gelieferte, von einem A/D-Wandler zunächst digitalisierte Sensorsignal (Messwert (20) in das Funktelegramm um, das dann dem eigentlichen Hochfrequenz-Sender 35 zugeführt und von diesem abgestrahlt wird und zu der Antenne 25' gelangt. Von dort wird das empfangene Funktelegramm wie vorstehend schon beschrieben weitergeleitet, der Messwert 20 extrahiert und der Signal-Aufbereitungseinheit 29 zur weiteren Verarbeitung und Regelung zugeführt. Nicht dargestellt ist hier die Möglichkeit einer Übertragung mit zwischengeschalteten Antentennen 25 und 28 sowie dem Hochfrequenzkabel 27 aus Fig. 1.

Alternativ oder zusätzlich ist nach einer Variante der erfindungsgemäßen Vorrichtung vorgesehen, dass eine Aktivierung des Mikrokontrollers 31 und der nachfolgenden Signalaufbereitungs- und Übertragungsstufen nur dann erfolgt, wenn das Sensorsignal 20 bzw. die Messwerte einen vorgegebenen Wert überschreiten. Mit anderen Worten: Hier würde eine Messwertübertragung und ein ggf. Eingreifen der oben beschriebenen Signalaufbereitungseinheit 29 nur dann erfolgen, wenn der Messwert ein Verlassen zulässiger Betriebsbereiche indiziert.

In den Figuren 3 bis 5 sind alternative Anordnungen des ersten Generatorelements 15 zur bedarfsweise optimalen Ausnutzung des zur Verfügung stehenden Montageraums und die relative Ausrichtung der jeweils zugeordneten Permanentmagnete des zweiten Generatorelements 18 schematisch unter Weglassung wesentlicher anderer Komponenten der Erfindung dargestellt. Dabei sind entsprechende Elemente mit denselben Bezugszeichen wie in den Figuren 1 und 2 versehen.

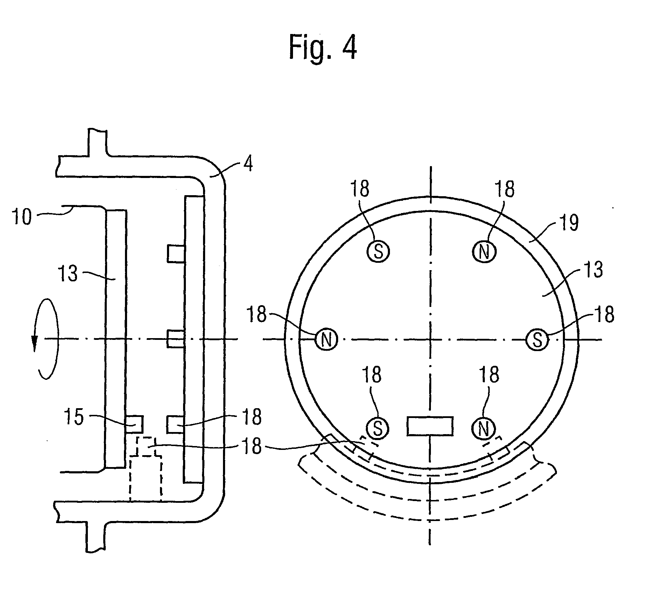

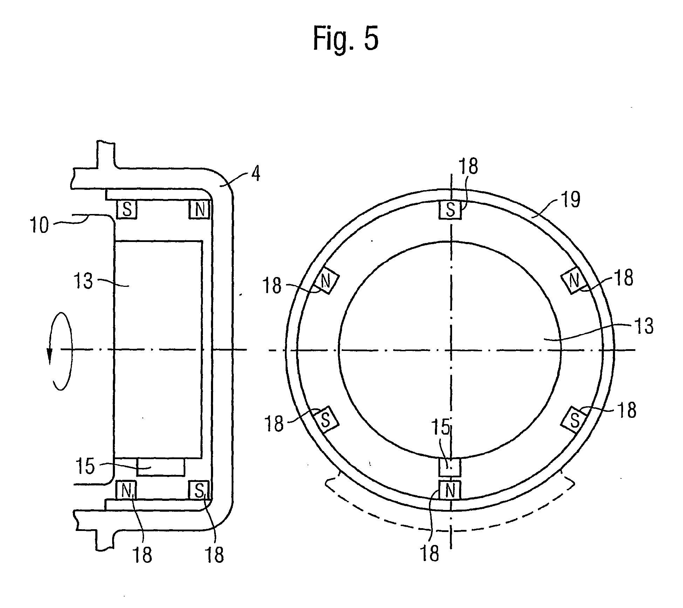

Figur 3 zeigt eine radiale Ausrichtung des ersten Generatorelements 15, die der Anordnung der Figur 1 entspricht, während Figur 4 eine tangentiale Ausrichtung des ersten Generatorelements 15 zeigt mit dementsprechend axialer (oder auch möglicher, radialer, gestrichelt dargestellter) Anordnung der Permanentmagneten des zweiten Generatorelements 18. Figur 5 zeigt schließlich eine axiale Ausrichtung des ersten Generatorelements 15. Die tangentiale Ausrichtung bietet Vorteile bei niedrigen Drehzahlen und/oder großem Energiebedarf. Die axiale Ausrichtung bietet Vorteile bei radial beengten Einbauräumen.

**Bezugszeichenliste**

| | |
|---|---|
| 1 | Radsatzlager |
| 2 | Drehachse |
| 3 | Radachse / Radnabe |
| 4 | Radsatzlagergehäuse |
| 5 | Gehäusedeckel |
| 6 | Ende |
| 7 | Lagerring |
| 8 | Lagerring |
| 9 | Wälzkörper |
| | |
| 10 | Achskappe |
| 11 | Bohrung |
| 12 | Sensor |
| 13 | Adapterplatte |
| 14 | Sendeeinheit |
| 15 | erstes Generatorelement |
| 16 | Energiespeicher |
| 18 | zweites Generatorelement |
| 19 | zweite Adapterplatte |
| | |
| 20 | Messgrößen |
| 25, 25' | Antenne |
| 27 | Hochfrequenzkabel |
| 28 | externe Antenne |
| 29 | Signal-Aufbereitungseinheit |
| | |
| 31 | Mikrokontroller |
| 35 | Hochfrequenz-Sender |

## Patentansprüche

1. Vorrichtung zur Überwachung mindestens einer Betriebsgröße eines Radsatzlagers (1), insbesondere für Schienenfahrzeuge, das mindestens einen rotierenden Lagerring (7) und ein ortsfestes Radsatzlagergehäuse (4) umfasst, mit
- einem Sensor (12), der unmittelbar an dem rotierenden Lagerring (7) angeordnet ist,
- einer Sendeeinheit (14), die mit dem Lagerring (7) mit rotierend angeordnet ist und die von dem Sensor (12) gelieferte Messwerte (20) drahtlos zu einer ortsfesten Empfangseinrichtung (25, 29) übermittelt,
- und einer Energieversorgungseinheit mit einem ersten mitrotierenden Generatorelement (15) und einem zweiten kooperierenden am Radlagergehäuse angeordneten Generatorelement (18), die den Sensor (12) und die Sendeeinheit (14) mit Energie versorgt, **dadurch gekennzeichnet, dass** eine erste Adapterplatte (13) vorgesehen ist, die die Sendeeinheit (14) und das erste Generatorelement (15) trägt und die an einer mitrotierenden Achskappe (10) befestigt ist und/oder dass eine zweite Adapterplatte (19) vorgesehen ist, die das zweite Generatorelement (18) und die Empfangseinrichtung (25) trägt.

2. Vorrichtung nach Anspruch 1, wobei der Sensor (12) ein Temperatursensor ist.

3. Vorrichtung nach Anspruch 2, wobei der Temperatursensor (12) ein temperaturabhängiger elektrischer Widerstand ist.

4. Vorrichtung nach einem der vorangehenden Ansprüche, wobei das erste Generatorelement (15) ein Wegandelement ist und das zweite kooperierende Generatorelement (18) von ortsfest angeordneten Permanentmagneten gebildet ist.

5. Vorrichtung nach einem der vorangehenden Ansprüche, wobei die erste Adapterplatte (13) ein Kunststoff- oder Kunststoffvergussteil ist.

6. Vorrichtung nach Anspruch 5, wobei die erste Adapterplatte (13) an die Kontur der Achskappe (10) angepasst ist.

7. Vorrichtung nach einem der vorangegangenen Ansprüche, wobei die Adapterplatten (13, 19) kreisförmig sind.

8. Vorrichtung nach einem der vorangehenden Ansprüche, wobei die Empfangseinrichtung (25) eine passive Antenne ist, an die eine außerhalb des Radsatzlagergehäuses (4) angeordnete Antenne (28) angeschlossen ist.

9. Vorrichtung nach einem der Ansprüche 1 bis 7, wobei das Radsatzlagergehäuse (4) von einem Gehäusedeckel (5) abgeschlossen ist, der zumindest einen für die von der Sendeeinheit (14) abgestrahlten Funksignale durchlässigen Bereich aufweist.

10. Vorrichtung nach Anspruch 9, wobei der durchlässige Bereich des Gehäusedeckels (5) aus einem Kunststoffmaterial besteht.

11. Vorrichtung nach Anspruch 9 oder 10, wobei das zweite Generatorelement (18) in den Gehäusedeckel (5) eingebettet, insbesondere eingegossen, ist.

12. Vorrichtung nach einem der vorangehenden Ansprüche, wobei die Signalübermittlung zur Empfangseinrichtung (25) erst erfolgt, wenn die Messwerte (20) einen vorgegebenen oder vorgebbaren Schwellwert überschreiten.

13. Vorrichtung nach einem der vorangehenden Ansprüche, wobei eine Signal-Aufbereitungseinheit (29) vorgesehen ist, die die übermittelten Messwerte (20) hinsichtlich des Messwerttrends auswertet und daraus eine Gefährdungsprognose ableitet.

14. Vorrichtung nach Anspruch 13, wobei die Signal-Aufbereitungseinheit (29) einen Vergleich zwischen mehreren Radsatzlagern einer Einheit, beispielsweise eines Waggons, durchführt und Abweichungen anzeigt, wenn diese eine vorgegebene Toleranzschwelle überschreiten.

## Claims

1. Device for monitoring at least one operating variable of a wheel set bearing (1), in particular for rail vehicles, which comprises at least one rotating bearing ring (7) and a fixed wheel set bearing housing (4), having
- a sensor (12) which is arranged directly on the rotating bearing ring (7)
- a transmitter unit (14) which is arranged so as to rotate along with the bearing ring (7) and which transmits the measured values (20) supplied by the sensor (12) to a fixed receiver device (25, 29) in a wireless fashion,
- and an energy-supply unit having a first generator element (15) which rotates along and a second cooperating generator element (18) which is arranged on the wheel bearing housing and which supplies energy to the sensor (12) and to the transmitter unit (14), **characterized in that** a first adaptor plate (13) is provided which bears the transmitter unit (14) and the first generator element (15) and which is attached to an axial cap (10) which rotates along, and/or **in that** a second adapter plate (19) is provided which bears the second generator element (18) and the receiver device (25).

2. Device according to Claim 1, wherein the sensor (12) is a temperature sensor.

3. Device according to Claim 2, wherein the temperature sensor (12) is a temperature-dependent electric resistor.

4. Device according to one of the preceding claims, wherein the first generator element (15) is a Wiegand element, and the second cooperating generator element (18) is formed by fixedly arranged permanent magnets.

5. Device according to one of the preceding claims, wherein the first adapter plate (13) is a plastic part or plastic casting.

6. Device according to Claim 5, wherein the first adapter plate (13) is adapted to the contour of the axial cap (10).

7. Device according to one of the preceding claims, wherein the adapter plates (13, 19) are circular.

8. Device according to one of the preceding claims, wherein the receiver device (25) is a passive antenna to which an antenna (28) which is arranged outside the wheel set bearing housing (4) is connected.

9. Device according to one of Claims 1 to 7, wherein the wheel set bearing housing (4) is connected by a housing lid (5) which has at least one area which is permeable to the radio signals emitted by the transmitter unit (14).

10. Device according to Claim 9, wherein the permeable region of the housing lid (5) is composed of a plastic material.

11. Device according to Claim 9 or 10, wherein the second generator (18) is embedded, in particular cast, into the housing lid (5).

12. Device according to one of the preceding claims, wherein the transmission of signals to the receiver device (25) does not take place until the measured values (20) exceed a predefined or predefinable threshold value.

13. Device according to one of the preceding claims, wherein a signal-conditioning unit (29) is provided which evaluates the transmitted measured values (20) with respect to the measured value trend and derives a danger prediction therefrom.

14. Device according to Claim 13, wherein the signal-conditioning unit (29) carries out a comparison between a plurality of wheel set bearings of a unit, for example of a wagon, and indicates deviations if said deviations exceed a predefined tolerance threshold.

## Revendications

1. Dispositif de contrôle d'au moins une grandeur de fonctionnement d'un palier d'essieu (1), en particulier pour des véhicules ferroviaires, comprenant au moins une bague de palier rotative (7) et un boîtier de palier d'essieu fixe (4), comprenant :
- un capteur (12) qui est disposé directement sur la bague de palier rotative (7),
- une unité émettrice (14) qui est disposée de manière à tourner avec la bague de palier (7) et qui transmet des valeurs de mesures (20) fournies par le capteur (12) sans fil à un dispositif récepteur fixe (25, 29),
- et une unité d'alimentation en puissance comprenant un premier élément générateur (15) entraîné conjointement en rotation et un deuxième élément générateur coopérant (18) disposé sur le boîtier de palier d'essieu, lequel alimente en puissance le capteur (12) et l'unité émettrice (14), **caractérisé en ce qu'**une première plaque d'adaptateur (13) est prévue, laquelle porte l'unité émettrice (14) et le premier élément générateur (15) et est fixée à un chapeau d'essieu (10) entraîné conjointement en rotation et/ou **en ce qu'**une deuxième plaque d'adaptateur (19) est prévue, laquelle porte le deuxième élément générateur (18) et le dispositif récepteur (25).

2. Dispositif selon la revendication 1, dans lequel le capteur (12) est un capteur de température.

3. Dispositif selon la revendication 2, dans lequel le capteur de température (12) est une résistance électrique dépendant de la température.

4. Dispositif selon l'une quelconque des revendications précédentes, dans lequel le premier élément générateur (15) est un élément Wiegand et le deuxième élément générateur coopérant (18) est formé par des aimants permanents disposés fixement.

5. Dispositif selon l'une quelconque des revendications précédentes, dans lequel la première plaque d'adaptateur (13) est une pièce en plastique ou coulée en plastique.

6. Dispositif selon la revendication 5, dans lequel la première plaque d'adaptateur (13) est adaptée au contour du chapeau d'essieu (10).

7. Dispositif selon l'une quelconque des revendications précédentes, dans lequel les plaques d'adaptateur (13, 19) sont de forme circulaire.

8. Dispositif selon l'une quelconque des revendications précédentes, dans lequel le dispositif récepteur (25) est une antenne passive à laquelle est raccordée une antenne (28) disposée à l'extérieur du boîtier de palier d'essieu (4).

9. Dispositif selon l'une quelconque des revendications 1 à 7, dans lequel le boîtier de palier d'essieu (4) est terminé par un couvercle de boîtier (5) qui présente au moins une région laissant passer les signaux radio émis par l'unité émettrice (14).

10. Dispositif selon la revendication 9, dans lequel la région laissant passer les signaux du couvercle de boîtier (5) se compose d'un matériau en plastique.

11. Dispositif selon la revendication 9 ou 10, dans lequel le deuxième élément générateur (18) est encastré dans le couvercle de boîtier (5), en particulier est coulé dans celui-ci.

12. Dispositif selon l'une quelconque des revendications précédentes, dans lequel la transmission de signaux au dispositif récepteur (25) s'effectue seulement si les valeurs de mesures (20) dépassent une valeur seuil prédéfinie ou prédéfinissable.

13. Dispositif selon l'une quelconque des revendications précédentes, dans lequel une unité de traitement des signaux (29) est prévue, laquelle analyse les valeurs de mesures transmises (20) en termes de tendance des valeurs de mesures et en déduit une prédiction des risques.

14. Dispositif selon la revendication 13, dans lequel l'unité de traitement des signaux (29) effectue une comparaison entre plusieurs paliers d'essieu d'une unité, par exemple d'un wagon, et indique les écarts si ceux-ci dépassent un seuil de tolérance prédéfini.
